# EUROPÄISCHE PATENTSCHRIFT

(11) **EP 1 315 604 B1**
(45) Veröffentlichungstag und Bekanntmachung des Hinweises auf die Patenterteilung: **26.10.2011**
(21) Anmeldenummer: 00958038.2
(22) Anmeldetag: 05.09.2000
(51) Int. Cl.: B29B 13/02

(54) **HEIZSTATION FÜR DIE ERWÄRMUNG VON ROHRENDEN VON KUNSTSTOFFROHREN**
HEATING STATION FOR HEATING THE EXTREMITIES OF PLASTIC PIPES
STATION DE CHAUFFAGE PERMETTANT DE CHAUFFER DES EXTREMITES DE TUBES EN MATIERE PLASTIQUE

(43) Veröffentlichungstag der Anmeldung: 04.06.2003
(73) Patentinhaber: Schnallinger, Helmuth, 4382 Sarmingstein 46 (AT)
(72) Erfinder: Schnallinger, Helmuth, 4832 (AT)
(74) Vertreter: Hübscher, Helmut
(86) Internationale Anmeldenummer: PCT/AT2000/000238
(87) Internationale Veröffentlichungsnummer: WO 2002/020234

(56) Entgegenhaltungen:
- WO-A-99/42279
- DE-A- 2 536 306
- DE-U- 7 208 597
- US-A- 5 094 795

## Beschreibung

Die Erfindung betrifft eine Heizstation für die Erwärmung der Rohrenden von Kunststoffrohren aus in warmem Zustand formbaren Kunststoffen, insbesondere Polyolefinen, wie Polyäthylen oder Polypropylen, auf bzw. über die Verformungstemperatur des jeweiligen Kunststoffes vor ihrer Formung zu Endmuffen in einer Formstation, mit Heizkörpern zur Erwärmung des Rohrendes von der Außen- und Innenseite her, wobei für die Innenseite des Rohrendes Strahlungsheizkörper vorgesehen und diese Rohrinnenseite mit einem Kühlmedium beaufschlagbar ist gemäß dem Anspruch 1.
Im des DE-A-25 36 306 ist eine Heigstation für de Enwärnung den Rohienden von Kunototoffiohien gemäß dem Obergriff des Anspruch 1 beschsiben.

Bisher werden in solchen Heizstationen bevorzugt Kontaktheizkörper verwendet, die der Form des Rohrendes angepaßt sind, um die Erwärmung vorwiegend durch Konvektion zu bewerkstelligen und dabei Überhitzungen zu vermeiden. Die Herstellung äußerer Kontaktheizkörper ist verhältnismäßig einfach, doch müssen solche Kontaktheizkörper für die Rohrinnenseite die Form von Spreizdornen aufweisen, weshalb es angestrebt wird, zumindest für die Innenseite des Rohrendes Strahlungsheizkörper einzusetzen. Die Praxis zeigt hier, daß bei ruhendem Strahlungsheizkörper nur mit verhältnismäßig niedrigen Heizleistungen für den Heizkörper und dementsprechend relativ niedrigen Oberflächen- bzw. Abstrahltemperaturen dieses Heizkörpers gearbeitet werden darf, da es sonst unter der Einwirkung der Strahlungswärme zu einer Überhitzung der inneren Rohroberfläche käme, die zu Schäden im Kunststoff an sich führt bzw. dann, wenn die innere Oberfläche zu stark erwärmt und daher zu weich wird, Faltenbildungen oder Oberflächenablösungen beim Aufmuffen verursachen kann. Aus der Praxis her bedeutet dies, daß sich lange Verweilzeiten des Rohrendes in der Heizstation ergeben, ehe eine gleichmäßige Durchwärmung dieses Rohrendes erzielt ist. Die Erwärmungszeit ist aber in weiterer Folge ein Hauptfaktor für die Gesamtverweilzeit des Rohrendes im Bearbeitungsbereich, da Endverformung und Abkühlung relativ rasch vor sich gehen können.

Zur Beschleunigung der Erwärmung von der Innenseite her, ist es bekannt (JP 10000 682 A) wieder einen Kontaktheizkörper für die Außenseite des Rohrendes in Form eines äußeren Heizzylinders vorzusehen, in den das Rohrende bis zu einer Abschirmungsplatte eingeschoben werden kann. In dieser Platte ist eine Belüftungsöffnung vorgesehen, durch die ein Heizstab und ein Blasrohr konzentrisch einragen. Die Rohrinnenseite wird also durch Strahlung und zusätzlich durch Konvektion durch die eingeblasenen Luft erwärmt. Höhere Temperaturen des Strahlungsheizkörpers sind aber auch hier aus den oben angeführten Gründen weitgehend unzulässig.

Aufgabe der Erfindung ist demnach die Schaffung einer Heizstation der eingangs genannten Art mit deren Hilfe eine wesentliche Beschleunigung bei der gleichmäßigen Erwärmung von Kunststoffrohlingen, insbesondere von Rohrenden bei der Fertigung von Endmuffen erzielt werden kann.

Die gestellte Aufgabe wird bei dieser Heizstation dadurch gelöst, daß die Strahlungsheizkörper für die Rohrinnenseite exzentrisch auf einem um die Rohrachse rotierend antreibbaren Träger angeordnet und mehrere, ihnen zugeordnete, die der Wärmestrahlung ausgesetzte Rohrinnenseite mit einem unter Druck zugeführten dampf- oder, wie an sich bekannt, gasförmigen Kühlmedium beaufschlagende Blasdüsen vorgesehen sind.

Durch die Relativbewegung des oder der Heizkörper kommt es zwingend zu einer vorteilhaften Verteilung der abgegebenen Strahlungsenergie über die gesamte, die Strahlungswärme aufnehmende Oberfläche, wobei durch die erfindungsgemäß zusätzlich vorgesehene Kühlung mit einem gas- oder dampfförmigen Medium, z. B. Druckluft, abgekühltem Wasserdampf oder einem Dampf-Luft-Gemisch, verhindert wird, daß es zu Überhitzungen der der Strahlung ausgesetzten Oberfläche kommt, wobei trotzdem aber genügend Wärmeenergie in den Rohling eingetragen und die Wärmeeinleitung sogar verbessert wird, so daß es zu einer raschen und gleichmäßigen Durchwärmung des Kunststoffes kommt. In der Praxis kann man bei Kunststoffmuffen die Verweildauer des Rohrendes in der Heizstation größenordnungsmäßig auf etwa ein Viertel der bisher aufzuwendenden Zeit herabsetzen. Es ist hier noch einmal zu betonen, daß durch die Zufuhr des Kühlmediums nur ein geringer Bruchteil der durch Strahlung zugeführten Wärmeenergie entfernt, aber trotzdem überraschend die unerwünschte Überhitzung des Oberflächenbereiches sicher vermieden wird.

Nach einer einfachen Ausführung sind die Blasdüsen an neben den Strahlungsheizkörpern am Träger exzentrisch zur Rohrachse angeordneten und mit den Strahlungsheizkörpern rotierenden Rohren in Form von Ausblaseöffnungen vorgesehen. Dabei können die Blasrohre an eine in das zu verformende Rohrende einragende konzentrische Versorgungsleitung anschließen, die zugleich den Träger für die Heizkörper und Blasdüsen bildet. Die umlaufenden Strahlungsheizkörper tragen zur Durchwirbelung des aufgeblasenen Kühlmediums bei.

Wegen der durch die erfindungsgemäße Ausgestaltung bei Verwendung einer Strahlungsheizung erzielbaren Vorteile, die auch darin bestehen, daß keine exakte Anpassung an die Oberflächenform des zu erwärmenden Teiles notwendig ist, empfiehlt es sich, zumindest bei der Neukonstruktion der Heizstation auch für die Außenseite des Rohrendes umlaufende Strahlungsheizkörper und zugeordnete Blasdüsen vorzusehen. Bei bestehenden Heizstationen wird man zumindest die Beheizungseinrichtungen für die Rohrinnenseite nach den Erkenntnissen der Erfindung umrüsten.

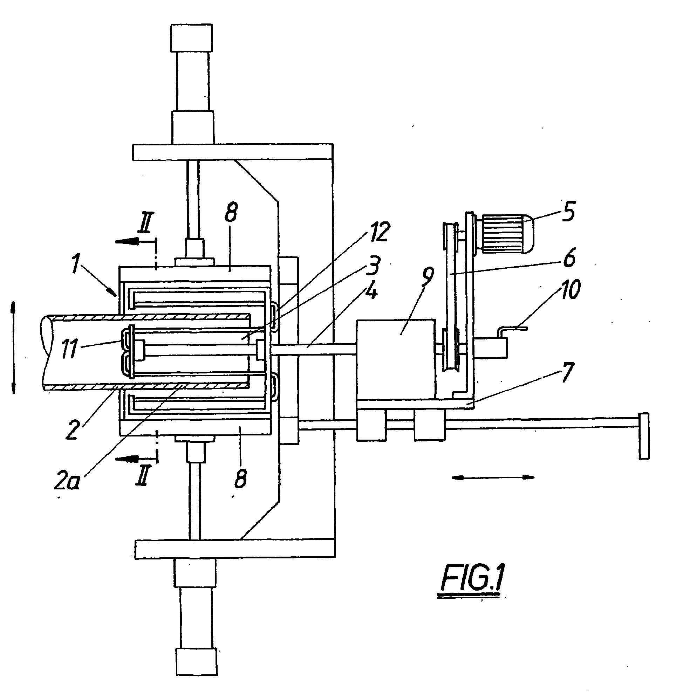

In der Zeichnung ist der Erfindungsgegenstand beispielsweise veranschaulicht. Es zeigen
- Fig. 1: eine Heizstation zur Durchführung des erfindungsgemäßen Verfahrens in schematischer Darstellungsweise im Teilschnitt durch den Heizbereich und

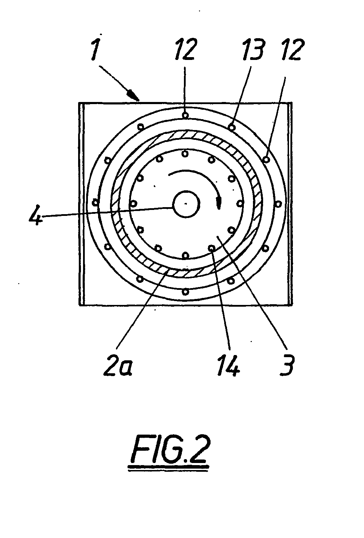

- Fig. 2: einen Schnitt nach der Linie II - II der Fig. 1.

Die dargestellte Heizstation 1 ist Bestandteil einer Fertigungsstation für Endmuffen an Kunststoffrohren 2. Diese Kunststoffrohre 2 werden über geeignete Manipulatoren koaxial in die Heizstation eingeführt. Dabei wird das aufzumuffende Rohrende 2a von der Außen- und Innenseite her erwärmt. Für diese Erwärmung ist ein Rotor 3 vorgesehen, der über eine Hohlwelle 4 von einem Motor 5 über ein Getriebe 6 rotierend angetrieben werden kann und mit dem Getriebe auf einem Schlitten 7 angebracht ist, mit dessen Hilfe er aus- und eingefahren werden kann, so daß nach dem Ausfahren des Rotors 3 das aufgewärmte Rohrende 2a mittels eines Aufmuffdornes aufgemufft und dann zwischen Preßbacken 8 in die Endform gebracht und abgekühlt werden kann.

Die Hohlwelle 4 des Rotors 3 ist über eine Stopfbuchse 9 mit einem Druckluftanschluß 10 verbunden. Vom Innenende der Hohlwelle 4 führen Abzweigleitungen 11 zu beim Ausführungsbeispiel S-förmig ausgebildeten Blasrohren 12, die von der Hohlwelle 4 getragen werden und in ihren die Außen- bzw. Innenseite des Rohrendes 2a überstreichenden Bereichen Austrittsöffnungen für die zugeführte Druckluft aufweisen, so daß sie diese Druckluft, gegen die Oberfläche der Außen- und Innenseite des Rohrendes 2a blasen. Zwischen den Leitungen 12 sind sowohl für die Rohraußen- als auch für die Rohrinnenseite stabförmige Rohrheizkörper 13, 14 angebracht, wobei die Heizleistung dieser Rohrheizkörper für die Rohraußen- und -innenseite gesondert geregelt werden kann. Es wäre auch möglich, gesonderte Blasrohre 12 für die Rohraußen- und -innenseite vorzusehen und die Druckluftzufuhr zu diesen beiden, der Außen- und Innenseite des Rohres zugeordneten Rohrgruppen gesondert zu regeln.

Beim Ausführungsbeispiel werden die Rohraußen- und die Rohrinnenseite über Strahlungsheizkörper erwärmt. Es wäre selbstverständlich auch möglich, nur für die Rohrinnenseite eine Erwärmung durch Strahlungsheizkörper 13 14 und Blasrohre 12 vorzusehen und die Rohraußenseite über entsprechende Heizbacken unter Wärmeleitung aufzuwärmen. Statt Druckluft kann als Kühlmedium auch ein anderes Gas, Wasserdampf oder ein Gas-Dampf-Gemisch verwendet werden. Die jeweilige Heizleistung und Oberflächentemperatur der Strahlungsheizkörper 13, 14 hängt vom Material des Kunststoffrohres 2 und von dessen Wandstärke ab. Auch die Stärke der Kühlmittelzufuhr wird, abhängig vom Material und der Wandstärke, nach Erfahrungswerten so geregelt, daß eine Überhitzung des Rohres im äußeren und inneren Oberflächenbereich sicher verhindert wird.

## Patentansprüche

1. Heizstation für die Erwärmung der Rohrenden (2a) von Kunststoffrohren (2) aus in warmem Zustand formbaren Kunststoffen, insbesondere Polyolefinen, wie Polyäthylen oder Polypropylen, auf bzw. über die Verformungstemperatur des jeweiligen Kunststoffes vor ihrer Formung zu Endmuffen in einer Formstation, mit Heizkörpern (13, 14) zur Erwärmung des Rohrendes (2a) von der Außen- und Innenseite her, wobei für die Innenseite des Rohrendes (2a) Strahlungsheizkörper (14) vorgesehen und diese Rohrinnenseite mit einem Kühlmedium beaufschlagbar ist, **dadurch gekennzeichnet, daß** die Strahlungsheizkörper (13) für die Rohrinnenseite exzentrisch auf einem um die Rohrachse rotierend antreibbaren Träger (3) angeordnet und mehrere, ihnen zugeordnete, die der Wärmestrahlung ausgesetzte Rohrinnenseite mit einem unter Druck zugeführten dampfoder, wie an sich bekannt, gasförmigen Kühlmedium beaufschlagende Blasdüsen vorgesehen sind.

2. Heizstation nach Anspruch 1, **dadurch gekennzeichnet, daß** die Blasdüsen an neben den Strahlungsheizkörpern am Träger (3) exzentrisch zur Rohrachse angeordneten und mit den Strahlungsheizkörpern rotierenden Rohren (12) in Form von Ausblaseöffnungen vorgesehen sind.

3. Heizstation nach den Ansprüchen 1 und 2, **dadurch gekennzeichnet, daß** die Blasrohre an eine in das zu verformende Rohrende (2a) einragende konzentrische Versorgungsleitung (4) anschließen, die zugleich den Träger für die Heizkörper (13, 14) und Blasdüsen bildet.

4. Heizstation nach den Ansprüchen 1 - 3, **dadurch gekennzeichnet, daß** auch für die Außenseite des Rohrendes (2a) umlaufende Strahlungsheizkörper (14) und zugeordnete Blasdüsen vorgesehen sind.

## Claims

1. Heating station for heating the pipe ends (2a) of synthetic material pipes (2) consisting of synthetic materials which can be moulded in the heated state, in particular polyolefms such as polyethylene or polypropylene, at or above the deformation temperature of the respective synthetic material prior to them being moulded to form insulating caps in a moulding station, having heating bodies (13, 14) for heating the pipe end (2a) from the outer and inner sides, wherein radiation heating bodies (14) are provided for the inner side of the pipe end (2a) and this pipe inner side can be influenced with a cooling medium, **characterised in that** the radiation heating bodies (13) for the pipe inner side are disposed eccentrically on a support (3) which can be rotationally driven about the pipe axis and several blast nozzles are provided which are allocated to the radiation heating bodies and influence the pipe inner side, which is subjected to the heat radiation, with a vaporous or, as is known *per se,* gaseous cooling medium supplied under pressure.

2. Heating station as claimed in Claim 1, **characterised in that** the blast nozzles are provided in the form of blow-off apertures on pipes (12) which are disposed adjacent to the radiation heating bodies on the support (3) eccentrically with respect to the pipe axis and rotate with the radiation heating bodies.

3. Heating station as claimed in Claims 1 and 2, **characterised in that** the blast pipes are attached to a concentric supply line (4) which protrudes into the pipe end (2a) to be deformed and simultaneously forms the support for the heating bodies (13, 14) and blast nozzles.

4. Heating station as claimed in Claims 1 - 3, **characterised in that** circulating radiation heating bodies (14) and associated blast nozzles are also provided for the outer side of the pipe end (2a).

## Revendications

1. Station de chauffage pour le chauffage des extrémités de tubes (2a), de tubes en matière synthétique (2) composés de matières synthétiques pouvant être formées à l'état chaud, en particulier des polyoléfines, telles que le polyéthylène ou le polypropylène, chauffage à ou au-dessus de la température de déformation de la matière synthétique respective, avant leur formage en des manchons d'extrémité dans une station de formage, avec des corps de chauffage (13, 14) pour le chauffage de l'extrémité de tube (2a), depuis le côté extérieur et le côté intérieur, sachant que des corps de chauffage par rayonnement (14) sont prévus pour le côté intérieur de l'extrémité de tube (2a), et que ce côté intérieur de tube est susceptible d'être sollicité par un fluide de refroidissement, **caractérisée en ce que** les corps de chauffage par rayonnement (13) prévus pour le côté intérieur du tube sont disposés de manière excentrée sur un support (3) susceptible d'être entraîné en rotation autour de l'axe de rotation, et une pluralité de buses de soufflage, leur étant associées, sollicitant le côté intérieur du tube, exposé au rayonnement thermique, avec un fluide de refroidissement se présentant sous forme de vapeur ou, comme ceci est connu en soi, se présentant sous forme de gaz, amené sous pression, sont prévues.

2. Station de chauffage selon la revendication 1, **caractérisée en ce que** les buses de soufflage sont prévues sous forme d'ouvertures de soufflage sur des tubes (12) disposés de manière excentrée par rapport à l'axe de rotation, à côté des corps de chauffage par rayonnement disposés sur le support (3), et tournant avec les corps de chauffage par rayonnement.

3. Station de chauffage selon les revendications 1 et 2, **caractérisée en ce que** les tubes de soufflage se raccordent à une conduite d'alimentation (4) concentrique, pénétrant dans l'extrémité du tube (2a) à déformer, formant en même temps le support pour les corps de chauffage (13, 14) et les buses de soufflage.

4. Station de chauffage selon les revendications 1 à 3, **caractérisée en ce que** des corps de chauffage par rayonnement (14) accomplissant une rotation et des buses de soufflage associées sont prévues également pour le côté extérieur de l'extrémité de tube (2a).
